# FASCICULE DE BREVET EUROPEEN

(11) **EP 0 686 840 B1**
(45) Date de publication et mention de la délivrance du brevet: **08.12.1999**
(21) Numéro de dépôt: 95401299.3
(22) Date de dépôt: 02.06.1995
(51) Int. Cl.: G01M 3/26, G01M 3/32

(54) **Dispositif de contrôle d'étanchéité d'une membrane souple montée sur un support rigide**
Vorrichtung zur Dichtigkeitskontrolle von elastischen Membranen, die auf einen steifen Träger montiert sind
Device for controlling the tightness of flexible membranes mounted on a rigid support

(30) Priorité: 06.06.1994 FR 9406895
(43) Date de publication de la demande: 13.12.1995
(73) Titulaire: LA CALHENE, F-78142 Velizy-Villacoublay Cédex (FR)
(72) Inventeur: Nottingham, Jon Mikle, F-41800 Villedieu le Chateau (FR); Jenny, Jean-Mary, CH-1700 Fribourg (CH)
(74) Mandataire: Dubois-Chabert, Guy

(56) Documents cités:
- DE-A- 3 842 392
- FR-A- 2 530 813
- FR-A- 2 643 713
- US-A- 5 138 871
- PATENT ABSTRACTS OF JAPAN vol. 18 no. 82 (C-1164) ,10 Février 1994 & JP-A-05 287601 (EAGLE IND. CO. LTD.) 2 Novembre 1993,
- PATENT ABSTRACTS OF JAPAN vol. 14 no. 227 (C-718) ,15 Mai 1990 & JP-A-02 053902 (EAGLE IND. CO. LTD.) 22 Février 1990,

## Description

L'invention concerne un dispositif de contrôle d'étanchéité d'une membrane souple montée sur un support rigide, et elle peut trouver emploi pour les dispositifs d'intervention très fréquents dans les enceintes de confinement, tels que les gants, les demi-scaphandres et les dispositifs de transfert, par lesquels on peut travailler à la main à travers les enceintes sans rompre l'étanchéité de celles-ci, pour atteindre directement des outils ou d'autres objets dans les volumes qu'elles enclosent. Ces enceintes sont employées par exemple dans les industries pharmaceutiques.

Il est manifeste que de telles membranes, dont la matière peut éventuellement se fendre ou devenir poreuse en vieillissant, constituent des éléments de faiblesse de l'enceinte, ce qui compromet l'étanchéité qu'elle doit offrir. On éprouve donc le besoin de contrôler la continuité de la matière de la membrane.

Certains procédés de contrôle d'étanchéité sont déjà connus dans cette technique ou d'autres pour vérifier l'étanchéité de membranes souples ou caoutchouteuses telles que des gants. On peut par exemple poser la membrane contre une masse conductrice d'électricité de forme complémentaire à celle de la membrane au repos, et approcher une électrode de l'autre côté de la membrane. Un courant électrique passe entre l'électrode et la masse si la membrane n'est pas étanche. Selon une variante de ce procédé utilisable pour des gants, on vérifie si une perte de charge électrostatique entre le porteur du gant et une électrode extérieure apparaît. Mais dans tous ces procédés la membrane doit être détachée du support sur lequel elle est éventuellement montée, ce qui est peu pratique et n'est pas suffisant pour les membranes qui sont installées devant des ouvertures d'enceintes de protection. Il faut alors contrôler l'étanchéité non seulement de la membrane elle-même mais du montage par lequel la membrane est unie à une manchette ou à un élément analogue de l'enceinte.

Le but fondamental de l'invention est ainsi de permettre de contrôler aisément l'étanchéité d'une membrane dans sa position et son état de service, sans qu'il soit nécessaire de la démonter. Le contrôle peut ainsi être fait à tout moment, même quand l'enceinte est occupée par des produits dangereux.

Le dispositif de contrôle proposé dans ces conditions comprend, comme le document DE-A-38 42 392 qui apparaît comme l'art antérieur le plus proche, une boîte équipée d'un col à engager dans une manchette de montage de la membrane, le col comprenant un joint d'étanchéité contre la manchette et une ouverture située devant la membrane quand le col est engagé, un moyen de variation de pression dans la boîte et un moyen de mesure de contenu gazeux de la boîte. La boîte et la membrane forment une seconde enceinte qu'on porte à une pression différente de celle qui règne de l'autre côté de la membrane. Le moyen de mesure indique si des fuites de rétablissement de l'équilibre des pressions, dues à des fuites à travers la membrane ou son montage, existent.

Il est essentiel que la boîte soit montée de façon étanche dans la manchette, faute de quoi le contrôle d'étanchéité serait impossible ou très imprécis. Un moyen original -et constitutif de l'invention- pour garantir cette étanchéité entre la boîte et la manchette sans recourir à des précautions compliquées et coûteuses consiste à disposer deux rainures accolées de réception du joint d'étanchéité sur le col, et à utiliser comme joint un joint élastique roulant apte à sauter d'une rainure à l'autre. Ce saut est produit quand la force de frottement du joint contre la manchette atteint une valeur déterminée, qui correspond à une force de pression du joint suffisante selon l'expérience pour assurer l'étanchéité voulue.

Bien que plusieurs procédés puissent être envisagés pour suivre l'évolution du contenu gazeux de la boîte, il faut parfois pouvoir détecter des débits de fuite très faibles. Un manomètre sera donc souvent insuffisant, et c'est pourquoi on conseille de mesurer la concentration d'un gaz présent originellement au-delà de la membrane. Mais une difficulté apparaît dans le cas usuel où une atmosphère d'air identique existe de part et d'autre de la membrane. On recourt donc à une mesure particulière, qui consiste à injecter dans la boîte un autre gaz que celui qui est détecté après y avoir établi le vide. On peut ainsi créer une atmosphère d'azote pur dans la boîte et mesurer l'évolution de la concentration en oxygène.

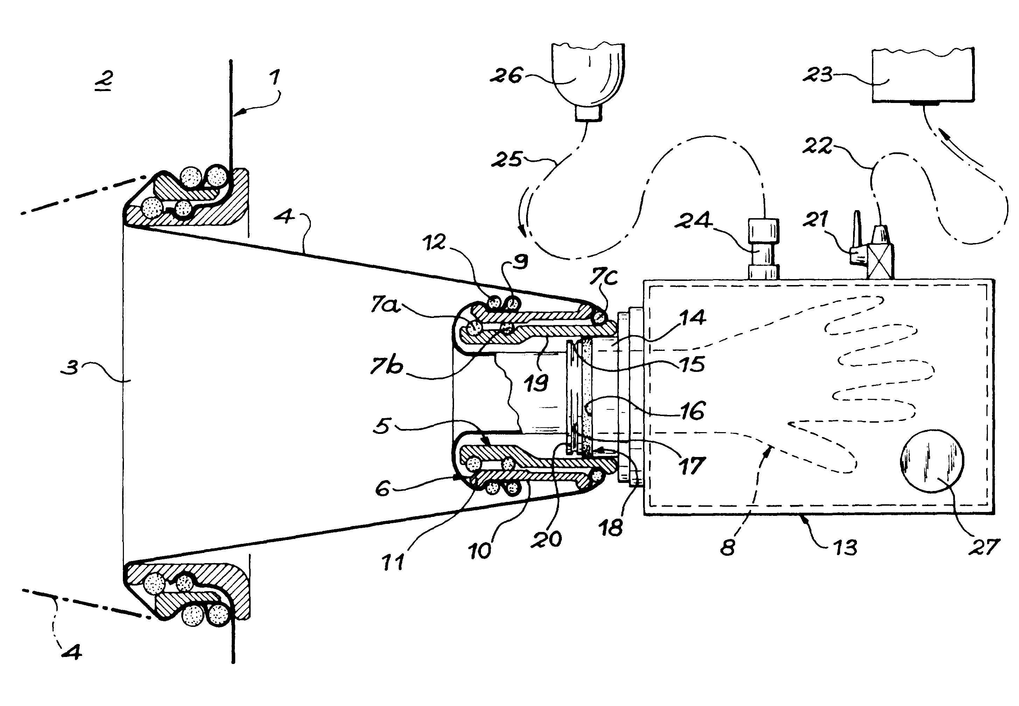

L'invention va maintenant être décrite à l'aide de la figure unique, qui décrit une réalisation possible parmi d'autres de l'invention.

On a figuré une enceinte 1 de confinement d'un volume 2 de contenu dangereux. Les travaux dans le volume 2 depuis l'extérieur sont rendus possibles par une ouverture 3 de l'enceinte 1, autour de laquelle est installé un manchon 4 cylindrique ou conique, ici en matière souple comme l'enceinte 1, sans que ce soit nécessaire. Le manchon 4 est relié à l'enceinte 1 à une extrémité et porte à son autre extrémité un dispositif de manchette composé essentiellement d'une manchette interne 5 et d'une manchette externe 6 qui sont concentriques et à la fois unies et espacées par deux joints d'étanchéité 7a et 7b autonomes et un troisième 7c fixé au bout du manchon 4. Les extrémités axiales de la manchette externe 6 sont coincées entre celles de la manchette interne 5 par l'entremise des joints 7a et 7c. Les manchettes 5 et 6 sont ainsi fixées au manchon 4. Un système analogue de manchettes relie le manchon 4 à l'enceinte 1.

Un gant 8 est installé à travers l'ouverture 3, et, plus précisément, un joint torique 9 qui délimite son embouchure est tendu et installé sur une portée externe 10 de la manchette externe 6, derrière un épaulement d'extrémité 11. Un autre joint d'étanchéité 12 est intercalé entre le joint torique 9 et l'épaulement d'extrémité 11 pour renforcer le contact du gant 8 sur la portée externe 10 et interdire d'arracher le gant 8 de la manchette externe 8 par inadvertance. On ne discutera cependant pas plus de ce montage ni de la structure du manchon 4, qui sont connus : l'invention n'en dépend pas directement et pourrait être mise en oeuvre avec d'autres systèmes. On constate que des défauts d'étanchéité peuvent provenir de la matière du gant 8 lui-même, mais aussi de jeux entre le gant 8 et la portée externe 10, malgré les joints 9 et 12.

Le gant 8 s'étend normalement vers le volume 2. On l'a cependant représenté quand l'invention est active, et il a été pour cela retourné, et attiré à l'extérieur du volume 2 en retournant aussi le manchon 4. Il s'étend alors hors des manchettes 5 et 6 jusque dans une boîte 13, terminée par un appendice en forme de col 14 enfoncé dans la manchette interne 5. Le col 14 est creusé d'une gorge extrême 15 et d'une gorge arrière 16 qui sont parallèles entre elles et toutes proches, séparées seulement par une crête 17. Un joint roulant 18 leur est associé. Il s'agit d'un joint élastique et torique apte à sauter la crête 17 pour passer d'une des gorges 15 ou 16 à l'autre selon le sens des forces de frottement qu'il subit. Quand la boîte 13 est enfoncée dans la manchette interne 5, la circonférence externe du joint roulant 18 frotte contre la portée interne 9 de cette manchette interne 5, et le joint roulant 18 passe dans la gorge arrière 16 : la personne qui tient la boîte pour enfoncer le col 14 ressent ce saut, car elle doit fournir un surcroît d'effort pour faire passer le joint roulant 18 sur la crête 17. Elle a alors la certitude que la force de compression du joint roulant 18 entre le col 14 et la manchette interne 5, et qui est proportionnelle à la force de frottement, est assez grande pour garantir l'étanchéité autour du joint roulant 18. Elle cesse alors d'enfoncer le col 14. Le joint roulant 18 retourne ensuite dans la gorge extrême 15 quand la boîte 13 est retirée de la manchette interne 5.

Si on excepte une ouverture 20 au bout du col 14, devant le gant 8, qui y pénètre s'il est retourné, la boîte 13 est étanche à l'exception de deux raccordements. Le premier est un robinet 21 auquel on peut brancher le tuyau 22 d'aspiration d'une pompe à vide 23 pour évacuer totalement le contenu gazeux de la boîte 13. Le second raccordement est un embout 24 auquel on peut brancher un tuyau d'alimentation 25 d'une bouteille d'azote 26, ou d'un autre gaz si les circonstances le justifient. Enfin, un analyseur d'oxygène 27, ou ici encore d'un autre gaz, est disposé sur la boîte 13.

Quand la boîte 13 est raccordée au manchon 4, son contenu gazeux est aspiré par la pompe à vide 23 puis remplacé par de l'azote de la bouteille 26. La pression dans la boîte 13 est réglée à la valeur voulue et la mesure consiste à suivre l'évolution de la concentration en oxygène, à partir d'une valeur nulle. La vitesse de cette évolution, qui ne dépend que des défauts d'étanchéité qu'on veut contrôler, est proportionnelle au débit de fuite à travers le gant 8. On en déduit donc la qualité, suffisante ou non, du gant 8 et de son montage.

## Revendications

1. Dispositif de contrôle d'étanchéité d'une membrane souple (8), telle qu'un gant, installée à travers une ouverture (3) d'une manchette (4, 5, 6), comprenant une boîte (13) équipée d'un col (14) à engager dans la manchette, le col comprenant un joint d'étanchéité (18) contre la manchette et une ouverture (20) située devant la membrane (8) quand le col est engagé, un moyen (23) de variation de la pression dans la boîte et un moyen (26) de mesure de contenu gazeux de la boîte, caractérisé en ce que le col comprend deux rainures (15, 16) accolées de réception du joint (18), le joint étant un joint élastique roulant apte à sauter d'une rainure à l'autre.

2. Dispositif de contrôle d'étanchéité suivant la revendication 1, caractérisé en ce que le moyen de variation de pression est une pompe à vide (23).

3. Dispositif de contrôle d'étanchéité suivant l'une quelconque des revendications 1 ou 2, caractérisé en ce que le moyen de mesure est un analyseur (27) d'un gaz présent au-delà de la membrane.

4. Dispositif de contrôle d'étanchéité suivant les revendications 2 et 3, caractérisé en ce qu'il comprend un moyen d'injection (26) d'un autre gaz dans la boîte.

5. Dispositif de contrôle d'étanchéité suivant la revendication 4, caractérisé en ce que le gaz analysé est l'oxygène et le gaz injecté est l'azote.

## Patentansprüche

1. Vorrichtung zur Dichtheitskontrolle einer elastischen Membran (8) wie z.B. eines Handschuhs, angebracht durch eine Öffnung (3) einer Manschette (4,5,6), umfassend ein Gehäuse (13), ausgestattet mit einem in die Manschette hineinzusteckenden Hals (14), wobei der Hals einen Dichtring (18) gegen die Maschette umfaßt und eine Öffnung (20), vor der Membran (8) befindlich, wenn der Hals hineingesteckt ist, eine Einrichtung (23) zur Druckveränderung in dem Gehäuse und eine Einrichtung (26) zur Messung des gasförmigen Inhalts des Gehäuses.
**dadurch gekennzeichnet**,
daß der Hals zwei nebeneinanderliegende Rillen (15, 16) zur Aufnahme des Dichtrings (18) umfaßt, wobei der Dichtring ein rollbarer elastischer Dichtring ist, der von einer Rille in die andere springen kann.

2. Vorrichtung zur Dichtheitskontrolle nach Anspruch 1, dadurch gekennzeichnet, daß die Einrichtung zur Druckveränderung eine Vakuumpumpe (23) ist.

3. Vorrichtung zur Dichtheitskontrolle nach einem der Ansprüche 1 oder 2, dadurch gekennzeichnet, daß die Meßeinrichtung ein Analysator (27) eines jenseits der Membran vorhandenen Gases ist.

4. Vorrichtung zur Dichtheitskontrolle nach den Ansprüchen 2 und 3, dadurch gekennzeichnet, daß sie eine Einrichtung zum Einblasen (26) eines anderen Gases in das Gehäuse umfaßt.

5. Vorrichtung zur Dichtheitskontrolle nach Anspruch 4, dadurch gekennzeichnet, daß das analysierte Gas Sauerstoff ist und das eingeblasene Gas Stickstoff.

## Claims

1. Device for controlling the imperviousness of a flexible membrane (8), such as a glove, installed through an opening (3) of a collar (4, 5, 6), having a box (13) equipped with a neck (14) to be engaged in the collar, the neck having a seal (18) against the collar and an opening (20) in front of the membrane (8) when the neck is engaged, a means (23) for varying the pressure in the box and a means (26) for measuring the gaseous content of the box, characterized in that the neck has two grooves (15, 16) joined side by side for receiving the seal (18), which is a rolling elastic seal able to jump from one groove to the next.

2. Imperviousness controlling device according to claim 1, characterized in that the pressure varying means is a vacuum pump (23).

3. Imperviousness controlling device according to either of the claims 1 and 2, characterized in that the measuring means is an analyzer (27) of a gas present beyond the membrane.

4. Imperviousness controlling device according to claims 2 and 3, characterized in that it comprises a means (26) for injecting another gas into the box.

5. Imperviousness controlling device according to claim 4, characterized in that the analyzed gas is oxygen and the injected gas is nitrogen.
